# EUROPEAN PATENT SPECIFICATION

(11) **EP 2 177 399 B1**
(45) Date of publication and mention of the grant of the patent: **02.12.2020**
(21) Application number: 09172963.2
(22) Date of filing: 14.10.2009
(51) Int. Cl.: B60Q 1/00, F21S 41/55, F21V 23/00

(54) **VEHICLE HEADLAMP**
FAHRZEUGSCHEINWERFER
PHARE DE VÉHICULE

(30) Priority: 14.10.2008 JP 2008265388
(43) Date of publication of application: 21.04.2010
(73) Proprietor: Koito Manufacturing Co., Ltd., Tokyo 108-8711 (JP)
(72) Inventor: Tachiiwa, Takeyuki, Shizuoka-shi, Shizuoka (JP)
(74) Representative: Cabinet Beau de Loménie

(56) References cited:
- DE-A1- 19 704 067
- JP-U- S6 265 703
- JP-U- S61 171 107
- US-A1- 2008 219 022

## Description

Apparatuses consistent with the present invention relate to vehicle headlamps.

Various cords are used in vehicle headlamps. For example, there are power supply cords for light sources, such as an incandescent lamp, a discharge lamp, an LED, etc. Further, there are power supply cords for electric-powered driving components, such as a motor and/or a solenoid for driving an adaptive front-lighting system (AFS), an aiming mechanism, a leveling mechanism, etc.

Therefore, in consideration of stress exerted on the cords and interference with other components, some measures are being proposed in respect to an installation of the cords in a headlamp (see, e.g., JP 2004-022324 A, JP 2004-227933 A, and US 2008-0219022).

However, in recent years, the number of cords in headlamps is increasing due to an increased tendency toward multi-functionalization and multi-lighting systems. Therefore, it is desired to facilitate an installation of cords into a headlamp and to take a measure for preventing the cords from being stuck between the components.

It is an object of the present invention to improve an installation of cords into a vehicle headlamp.

According to an illustrative aspect of the present invention, a vehicle headlamp is provided. The vehicle headlamp includes a lamp unit, a lamp body inside which the lamp unit is accommodated, and a cord supporting partition adapted to be attached to the lamp body, wherein when the cord supporting partition is attached to the lamp body, the cord supporting partition holds the cord away from the lamp unit, characterized in that the cord supporting partition comprises a first wall having a guide channel which is configured such that a cord to be coupled to the lamp unit is arranged inside and along the guide channel and supported by the guide channel, and in that the guide channel comprises at least one claw formed on an upper part of the guide channel that holds a portion of the cord in the guide channel..

Other aspects and advantages of the invention will be apparent from the following description, the drawings and the claims.

Hereinafter, an embodiment of the present invention will be described in detail with reference to the following drawings.
Fig. 1 is a horizontal sectional view of a vehicle headlamp according to an embodiment of the invention.
Fig. 2 is a front view of a lamp body shown in Fig. 1.
Fig. 3 is a sectional view taken along the line III-III in Fig. 2.
Fig. 4 is a perspective view of a portion of a cord supporting partition according to the embodiment of the invention.
Fig. 5 is a sectional view taken along the line V-V in Fig. 4, illustrating the cord supporting partition mounted on a rail.
Fig. 6 is a perspective view of a lamp body and a cord supporting partition according to an example of realisation, viewed obliquely from above, which is not part of the present invention.
Fig. 7 is an enlarged perspective view of a cord catch of a cord supporting partition according to the example.
Fig. 8 is a sectional view taken along the line VIII-VIII in Fig. 6, illustrating how the cord supporting partition is attached to the lamp body.

### Embodiment of the Invention

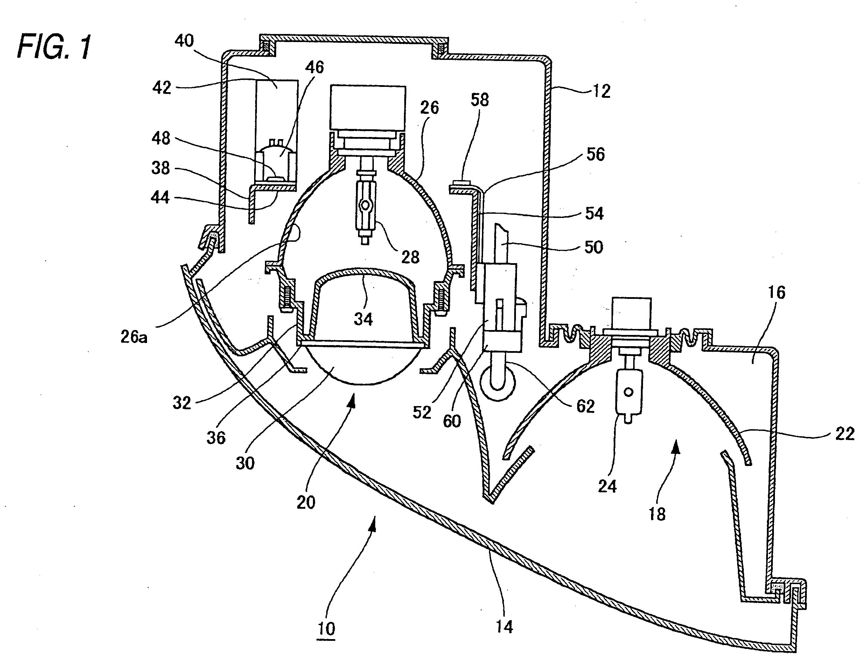

Fig. 1 shows a vehicle headlamp 10 according to an embodiment of the invention. The headlamp 10 is a right-side headlamp mounted on the right side of the front end of a vehicle. Because a left-side headlamp is bilaterally symmetric to the right-side vehicle headlamp 10, description of the left-side vehicle headlamp will be omitted in the following.

As shown in Fig. 1, the headlamp 10 includes a lamp body 12 which is recessed toward the rear and is opened toward the front, and a transparent front cover 14 which covers the front opening of the lamp body 12 to form a lamp chamber 16. Inside the lamp chamber 16, two lamp units 18, 20 are laterally arranged side by side.

In a widthwise direction of the vehicle, the lamp unit 18 is disposed more inward than the lamp unit 20. That is, as for the right-side headlamp 10, the lamp unit 18 is disposed to the left (to the right in Fig. 1) of the lamp unit 20. The lamp unit 18 is configured to produce a high beam. The lamp unit 20 is a projector-type lamp unit, and is configured to produce a low beam.

The high beam lamp unit 18 includes a reflector 22, and a light source bulb 24 supported by the reflector 22. For example, in this exemplary embodiment, the light source bulb 24 is an incandescent bulb. However, the type of bulb is not limited. The reflector 22 is supported by means of, for example, aiming screws and nuts so as to be tiltable with respect to the lamp body 12.

The projector-type lamp unit 20 includes a reflector 26, a discharge bulb 28 supported by the reflector 26, a convex lens 30 arranged in front of the reflector 26, and a lens holder 32 which holds the convex lens 30. The discharge bulb 28 is detachably attached to the reflector 26.

The reflector 26 has a reflecting plane 26a which converges light emitted from the discharge bulb 28. The lens holder 32 is cylindrical, and is fixed at the front end of the reflector 26. The convex lens 30 is held so as to close the front opening of the lens holder 32.

A diameter of the cylindrical lens holder 32 is reduced toward the front end, at which a shade 34 is integrally formed. Light emitted from the discharge bulb 28 but not converged by the reflector 26 is shielded by the shade 34 with respect to the convex lens 30, so that glare light is not produced.

A holding ring 36 is provided along the front end of the lens holder 32. A peripheral edge of the convex lens 30 is fitted into the holding ring 36, whereby the convex lens 30 is held at the front end of the lens holder 32.

The lamp unit 20 is supported by the lamp body 12 via a frame 38, below which an actuator (not shown) is disposed to laterally swivel the lamp unit 20 in a horizontal direction. The actuator is driven, for example, in response to a steering operation.

The actuator is driven with electric power which is supplied via a control circuit accommodated inside a box-shaped case 42 of a control circuit unit 40. The control circuit unit 40 is also supported by the frame 38. More specifically, the control circuit unit 40 is attached to a rear face of an attaching portion 44 of the frame 38 which is the right part of the frame 38. The control circuit unit 40 is attached to the frame 38 by fastening a screw 48 into the mounting portion 44 of the frame 38 from behind the bracket 46 while placing a bracket 46 in contact with the mounting portion 44 of the frame 38.

Two cords are led out from the control circuit unit 40. One of the cords is for connection with the actuator, and the other cord 50 is for electric power supply and signal transmission. The cord 50 is configured such that a power supply wire and a plurality of signal transmission wires are bundled together. A connector 52 is connected to a distal end of the cord 50.

The connector 52 is attached to a connector fixing portion 54 which is on the left side face of the frame 38. The connector fixing portion 54 is provided on a central part of the left side face of the frame 38 with respect to the vertical direction. The connector 52 is attached to the frame 38 by means of a bracket 56 and a screw 58. The bracket 56 is L-shaped when viewed from above.

An external connector 60 is connected to the connector 52. As shown in Fig. 1, a cord 62 for electric power supply and signal transmission from outside (hereinafter, a power supply cord 62) is connected to the external connector 60. The power supply cord 62 is installed via a cord supporting partition which is attached to for example, a bottom face of the lamp body 12.

In addition to the actuator, the headlamp 10 includes other components which use electricity. For example, in order to light a discharge bulb 28 of the lamp unit 20, a lighting circuit unit is provided. The lighting circuit unit may be placed directly below the lamp unit 20 and may be supported by the lamp body 12. The lighting circuit unit has a case and a discharge-bulb lighting circuit disposed inside the case. The discharge-bulb lighting circuit has a ballast circuit section and a start-up circuit section. The ballast circuit section boosts an in-vehicle battery voltage and converts the boosted voltage to a lighting voltage which is a high-frequency alternating, thereby applying the lighting voltage to the discharge bulb 28. The start-up circuit section superimposes, upon start-up, a starting voltage on the lighting voltage. A bulb socket is coupled to a distal end of a power supply cord led out from the lighting circuit unit, and is attached to the discharge bulb 28.

As described above, in addition to the cord 50 and the power supply cord 62, a plurality of cords are also installed inside the lamp body 12 in order to connect the various electric components. These cords may be installed so as to thread through a space between the components arranged inside the lamp body 12. However, in a case in which the cords are not accurately arranged in appropriate locations, the cords may be stuck between the components or between the lamp body 12 and one or more of the components during assembling work, resulting in a reduction in working efficiency.

In order to address such problems, a headlamp according to a first exemplary embodiment of the present invention has a cord supporting partition which facilitates an installation of a plurality of cords at an appropriate location.

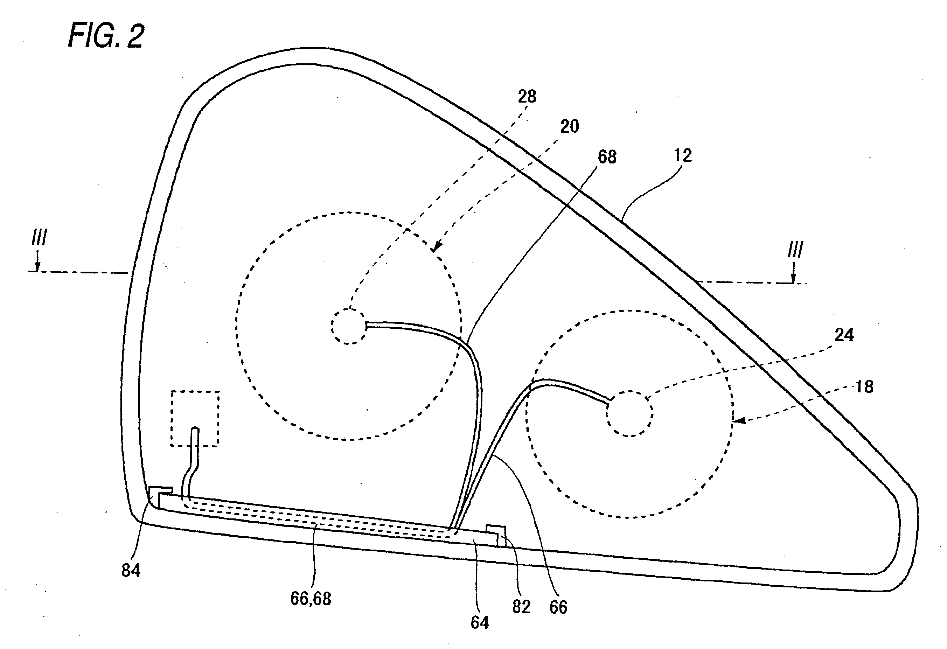

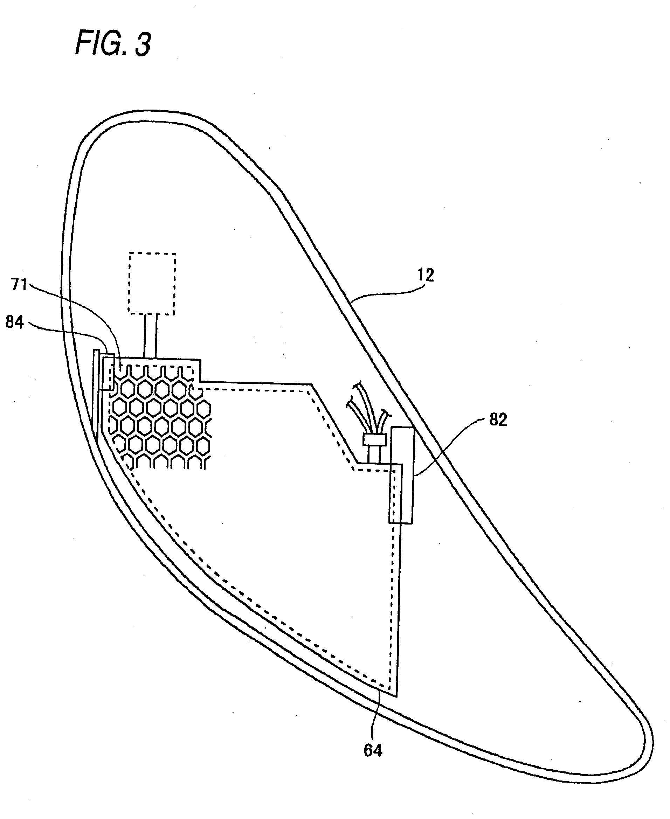

As shown in Fig. 2 and Fig. 3, the headlamp 10 according to the first exemplary embodiment has a cord supporting partition 64 which is disposed in a lower region inside the lamp body 12. The cord supporting partition 64 is adapted to be attached to the lamp body 12 such that cords 66, 68 to be coupled to the lamp units 18, 20 respectively are supported inside the cord supporting partition 64. When the cord supporting partition 64 is attached to the lamp body 12, the cord supporting partition 64 holds the accommodated portions of the cords 66, 68 away from the lamp units 18, 20. More specifically, the cord supporting partition 64 is configured to arrange the cords 66, 68 in a space between the cord supporting partition 64 and a wall of the lamp body 12 and along the wall of the lamp body 12. The cord supporting partition 64 makes it possible to arrange the cords 66, 68 within a certain region inside the lamp body 12, e.g., near a lower face of the lamp body 12 in this exemplary embodiment. Thus, when installing the cords 66, 68 into the headlamp 10, interference of the cords 66, 68 with, for example, the lamp units 18, 20 can be reduced.

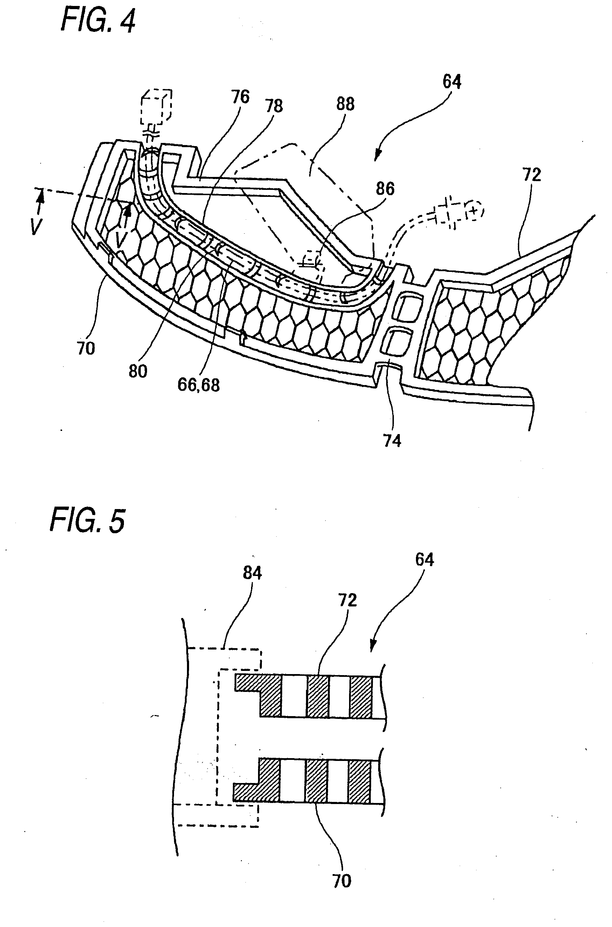

As shown in Fig. 4, the cord supporting partition 64 includes a first wall 70, a second wall 72, and a hinge 74 which couples the first wall 70 and the second wall 72. The first wall 70 and the second wall 72 have substantially the same contour. The first wall 70 has a rib 76 which is provided along an outer edge portion of the first wall 70, and a guide channel 78 which is provided as, for example, a groove, inside a space surrounded by the rib 76 to support a cord and/or a wire harness. The guide channel 78 is configured such that the cord and/or the wire harness are arranged inside and along the guide channel 78. Claws 80 are formed on an upper part of the guide channel 78 to prevent the cord and/or the harness from slipping out of the guide channel 78.

The first wall 70 is formed with a plurality of holes 71, arranged in a honeycomb configuration. The hexagonal holes are advantageous in that a weight of the first wall 70 can be reduced, and also in that cords and/or wire harnesses are visually recognizable from outside the cord supporting partition 64, which make it easier to check whether the cords and/or wire harnesses are appropriately fitted inside the guide channel 78. It is also possible to use holes of another geometry. The second wall 72 is substantially the same as the first wall 70 except that no guide channel 78 is provided in the second wall 72.

Next, description will be given as to how the cords are installed in the lamp body 12 by using the cord supporting partition 64. First, the cords 66, 68 are fitted in the guide channel 78 of the first wall 70 such that the cords 66, 68 are supported by the guide channel 78. Next, the second wall 72 is turned around the hinge 74 and is folded back toward the first wall 70, whereby portions of the cords 66, 68 are held from both sides and are accommodated inside the cord supporting partition 64. In other words, the first wall 70 and the second wall 72 face each other to hold and to house the portions of the cords 66, 68 therebetween.

Then, the cord supporting partition 64 is attached to the lamp body 12 from the front side of the lamp body 12 into the lower region inside the lamp body 12 in a state in which the cords 66, 68 are held inside the cord supporting partition 64. As shown in Fig. 2 and Fig. 3, inside the lamp body 12, guides or rails 82, 84 in the shape of L-shaped or C-shaped hooks are disposed on the lower face of the lamp body 12 and serve as guides to facilitate an attachment of the cord supporting partition 64 at an appropriate position and to hold the cord supporting partition 64 in place..

Fig. 5 is a sectional view taken along the line V-V in Fig. 4, illustrating the cord supporting partition 64 mounted on the rail 84. The rails 82, 84 guide the cord supporting partition 64 in a direction in which the cord supporting partition 64 is to be attached. As a result, working efficiency during the attachment of the cord supporting partition 64 to the lamp body 12 is improved. Further, because the cord supporting partition 64 holds and accommodates the portions of the cords 66, 68 from both sides, it is possible to prevent a friction between the cords and the lamp body 12 while attaching the cord supporting partition 64 to the lamp body 12.

The cord supporting partition 64 further includes a stopper lance 86 (an engaging portion) which is provided on a lower face of the first wall 70. When the cord supporting partition 64 is mounted on the lamp body 12 in place, the stopper lance 86 engages with an opening portion 88 or a recess step which is formed in the lower face of the lamp body 12, thereby preventing the cord supporting partition 64 from disengaging from the lamp body 12.

Example of realisation not being part of the present invention.

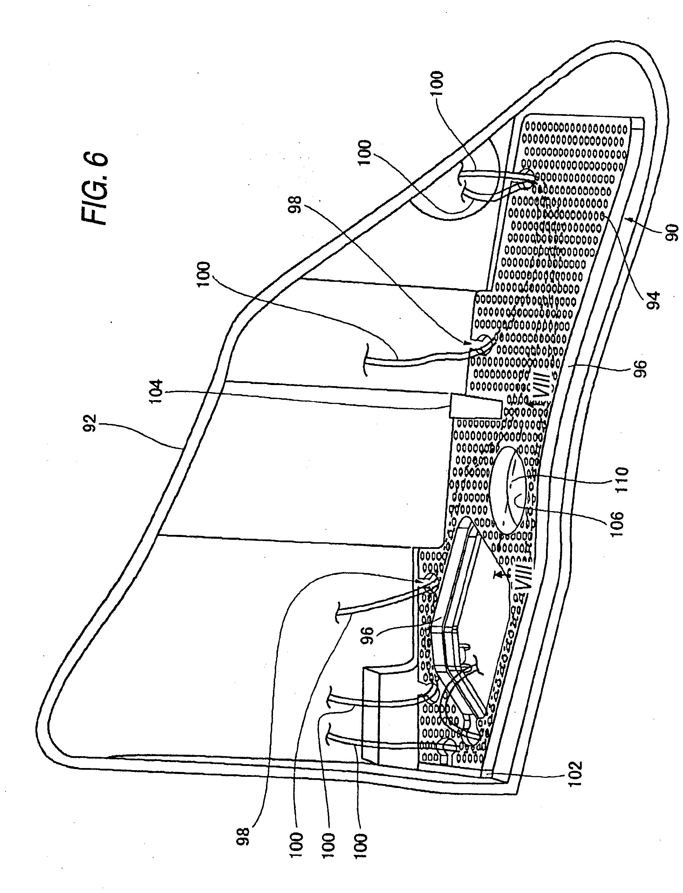

Fig. 6 is a perspective view of a lamp body 92 and a cord supporting partition 90 according to an example, viewed obliquely from above, which is not part of the present invention. Because portions other than the lamp body 92 and the cord supporting partition 90 are similar to those in the embodiment, description thereof will be omitted. The cord supporting partition 90 is attached to the lamp body 92 in a lower region inside the lamp body 92. Like in the embodiment, the cord supporting partition 90 is formed with a plurality of holes 94. This is advantageous in that a weight of the cord supporting partition 90 can be reduced, which leads to a reduction in weight of the headlamp, and also in that cords and/or wire harnesses are visually recognizable from outside the cord supporting partition 90, which facilitate working efficiency. The holes 94 may be of any geometry.

The cord supporting partition 90 has a rib 96 which is disposed along an outer edge of a lower face of the cord supporting partition 90. The rib 96 is directly brought into contact with the lower face of the lamp body 92. That is, looking at the cord supporting partition 90 alone, an open space surrounded by the rib 96 is created below the lower face of the cord supporting partition 90.

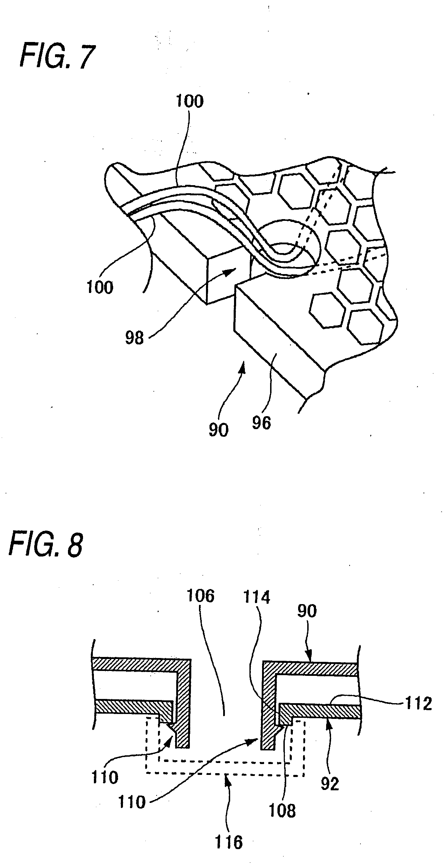

The cord supporting partition 90 further has cord catches 98 which are formed at circumferential edge portions of the cord supporting partition 90. Each of the cord catches 98 is configured to catch a cord and/or a wire harness that are supported by the cord supporting partition 90 such that the cord and/or the wire harness are drawn out from the cord supporting partition 90 toward the lamp unit. Fig. 7 is an enlarged perspective view of one of the cord catches 98. The cord catch 98 is formed in a keyhole shape so as to reliably catch the cords 100. More specifically, the cord catch 98 is configured to be narrower on the outer edge side of the cord supporting partition 90 than the inner part so that the cords 100 are less likely to disengage from the cord catch 98.

Next, description will be given as to how the cords are installed in the lamp body 92 by using the cord supporting partition 90. First, the cords 100 are arranged below the lower face of the cord supporting partition 90, and are hooked at the respective cord catches 98. Because each of the cord catches 98 is formed in a keyhole shape, the cords 100 are unlikely to be disengaged and are held in a state of being drawn out upward (see Fig. 7).

Then, in a state in which the cords 100 are supported by the cord supporting partition 90, the cord supporting partition 90 is positioned by abutting the left side and the rear side shown in Fig. 6 against abutting portions 102, 104 which are provided on the lower face of the lamp body 92 inside the lamp body 92. In this state, the cord supporting partition 90 is pressed against the lower face of the lamp body 12, whereby the cord supporting partition 90 is attached to the lamp body 92 such that the cords 100 to be coupled to the lamp units are supported by the cord supporting partition 90. Because the cords 100 are drawn out upward from the cord supporting partition 90, it is possible to improve working efficiency when coupling the cords 100 to the lamp units after the cord supporting partition 90 is attached to the lamp body 92.

Fig. 8 is a sectional view taken along the line VIII-VIII in Fig. 6, illustrating a portion where the cord supporting partition 90 is attached to the lamp body 92. A wall of the lamp body 92, to which the cord supporting partition 90 is attached, is formed with an opening portion 106. The cord supporting partition 90 has an engaging portion 110 which engages with an edge 108 of the opening portion 106 of the lamp body 92. The engaging portion 110 is configured to protrude from a side of the cord supporting partition 90 that faces the lamp body 12. When attaching the cord supporting partition 90 on a mounting face 112 of the lamp body 92 from above, the engaging portion 110 slides along an inner circumferential face 114 of the opening portion 106 with inward flexure of the engaging portion 110 and, at a certain point, the engaging portion 110 increases in its diameter due to an elastic restoring force of the engaging portion 110, whereby the engaging portion 110 engages with the opening portion 106. In short, the engaging portion 110 is snap-fitted to the opening portion 106. Thus, the cord supporting partition 90 can be easily fixed to the lamp body 92 in place. When the engaging portion 110 is engaged with the opening portion 106 of the lamp body 92 so that the cord supporting partition 90 is fixed to the lamp body 92, a cover 116 is attached to the lamp body 92 so as to close the opening portion 106.

While the present invention has been shown and described with reference to an embodiment thereof, it will be understood by those skilled in the art that various changes in assembling order, form and details, including combinations of configurations of the embodiment, may be made therein without departing from the scope of the present invention as defined by the appended claims.

## Claims

1. A vehicle headlamp (10) comprising:
a lamp unit (18, 20);
a lamp body (12) inside which the lamp unit (18, 20) is accommodated;
a cord (66, 68) coupled to the lamp unit (18, 20);
a cord supporting partition (64) adapted to be attached to the lamp body (12),
wherein, when the cord supporting partition (64) is attached to the lamp body (12), the cord supporting partition (64) holds the cord (66, 68) away from the lamp unit (18, 20),
**characterized in that** the cord supporting partition (64) comprises a first wall (70) having a guide channel (78) which is configured such that the cord (66, 68) is arranged inside and along the guide channel (78) and supported by the guide channel (78), and **in that** the guide channel (78) comprises at least one claw (80) formed on an upper part of the guide channel (78) that holds a portion of the cord (66, 68) in the guide channel (78).

2. The vehicle headlamp (10) according to claim 1, wherein the cord supporting partition (64) is configured to arrange the cord (66, 68) between the cord supporting partition (64) and a wall of the lamp body (12) and along the wall of the lamp body (12).

3. The vehicle headlamp (10) according to claim 1 or 2, wherein the cord supporting partition (64) comprises a second wall (72), and the first wall (70) and the second wall (72) are configured to hold and to accommodate the cord (66, 68) therebetween.

4. The vehicle headlamp (10) according to claim 3, wherein the cord supporting partition (64) further comprises a hinge (74) which couples the first wall (70) and the second wall (72).

5. The vehicle headlamp (10) according to any one of the preceding claims, wherein the cord supporting partition (64) is formed with a plurality of holes (71).

6. The vehicle headlamp (10) according to any one of the preceding claims, wherein the lamp body (12) comprises a guide (82, 84) which is configured to guide the cord supporting partition (64) in a direction in which the cord supporting partition (64) is attached to the lamp body (64).

7. The vehicle headlamp (10) according to any one of the preceding claims, wherein the cord supporting partition (64) comprises an engaging portion (86) which engages with the lamp body (12).

8. The vehicle headlamp (10) according to claim 7, wherein the lamp body (64) comprises an opening portion (88) with which the engaging portion (86) engages.

9. The vehicle headlamp (10) according to any one of the preceding claims, wherein the cord supporting partition (64) comprises a rib (76) which is formed along an outer edge of the cord supporting partition (64).

## Patentansprüche

1. Fahrzeugscheinwerfer (10), umfassend:
eine Lampeneinheit (18, 20),
einen Lampenkörper (12), in dem die Lampeneinheit (18, 20) untergebracht ist,
ein Kabel (66, 68), das mit der Lampeneinheit (18, 20) gekoppelt ist,
eine Kabelträgertrennwand (64), die dazu ausgelegt ist, an dem Lampenkörper (12) befestigt zu werden,
wobei, wenn die Kabelträgertrennwand (64) an dem Lampenkörper (12) befestigt ist, die Kabelträgertrennwand (64) das Kabel (66, 68) von der Lampeneinheit (18, 20) fernhält,
**dadurch gekennzeichnet, dass** die Kabelträgertrennwand (64) eine erste Wand (70) umfasst, die einen Führungskanal (78) aufweist, der so ausgestaltet ist, dass das Kabel (66, 68) innerhalb und entlang des Führungskanals (78) angeordnet ist und durch den Führungskanal (78) getragen wird, und dass der Führungskanal (78) zumindest eine Klaue (80) umfasst, die an einem oberen Teil des Führungskanals (78) ausgebildet ist, der einen Abschnitt des Kabels (66, 68) in dem Führungskanal (78) hält.

2. Fahrzeugscheinwerfer (10) nach Anspruch 1, wobei die Kabelträgertrennwand (64) dazu ausgestaltet ist, das Kabel (66, 68) zwischen der Kabelträgertrennwand (64) und einer Wand des Lampenkörpers (12) und entlang der Wand des Lampenkörpers (12) anzuordnen.

3. Fahrzeugscheinwerfer (10) nach Anspruch 1 oder 2, wobei die Kabelträgertrennwand (64) eine zweite Wand (72) umfasst und die erste Wand (70) und die zweite Wand (72) dazu ausgestaltet sind, das Kabel (66, 68) dazwischen zu halten und unterzubringen.

4. Fahrzeugscheinwerfer (10) nach Anspruch 3, wobei die Kabelträgertrennwand (64) ferner ein Scharnier (74) umfasst, welches die erste Wand (70) und die zweite Wand (72) koppelt.

5. Fahrzeugscheinwerfer (10) nach einem der vorhergehenden Ansprüche, wobei die Kabelträgertrennwand (64) mit mehreren Löchern (71) ausgebildet ist.

6. Fahrzeugscheinwerfer (10) nach einem der vorhergehenden Ansprüche, wobei der Lampenkörper (12) eine Führung (82, 84) umfasst, die dazu ausgestaltet ist, die Kabelträgertrennwand (64) in einer Richtung zu führen, in welcher die Kabelträgertrennwand (64) an dem Lampenkörper (64) befestigt ist.

7. Fahrzeugscheinwerfer (10) nach einem der vorhergehenden Ansprüche, wobei die Kabelträgertrennwand (64) einen Eingriffsabschnitt (86) umfasst, der mit dem Lampenkörper (12) in Eingriff steht.

8. Fahrzeugscheinwerfer (10) nach Anspruch 7, wobei der Lampenkörper (64) einen Öffnungsabschnitt (88) umfasst, mit welchem der Eingriffsabschnitt (86) in Eingriff steht.

9. Fahrzeugscheinwerfer (10) nach einem der vorhergehenden Ansprüche, wobei die Kabelträgertrennwand (64) eine Rippe (76) umfasst, die entlang eines äußeren Randes der Kabelträgertrennwand (64) ausgebildet ist.

## Revendications

1. Phare de véhicule (10) comprenant :
une unité de lampe (18, 20) ;
un corps de lampe (12) à l'intérieur duquel l'unité de lampe (18, 20) est logée ;
un cordon (66, 68) couplé à l'unité de lampe (18, 20) ;
une séparation de support de cordon (64) adaptée pour être fixée au corps de lampe (12),
dans lequel, lorsque la séparation de support de cordon (64) est fixée au corps de lampe (12), la séparation de support de cordon (64) maintient le cordon (66, 68) à distance de l'unité de lampe (18, 20),
**caractérisé en ce que** la séparation de support de cordon (64) comprend une première paroi (70) ayant un canal de guidage (78) qui est configuré de sorte que le cordon (66, 68) est agencé à l'intérieur et le long du canal de guidage (78) et supporté par le canal de guidage (78), et **en ce que** le canal de guidage (78) comprend au moins une griffe (80) formée sur une partie supérieure du canal de guidage (78) qui maintient une partie du cordon (66, 68) dans le canal de guidage (78).

2. Phare de véhicule (10) selon la revendication 1, dans lequel la séparation de support de cordon (64) est configurée pour agencer le cordon (66, 68) entre la séparation de support de cordon (64) et une paroi du corps de lampe (12) et le long de la paroi du corps de lampe (12).

3. Phare de véhicule (10) selon la revendication 1 ou 2, dans lequel la séparation de support de cordon (64) comprend une seconde paroi (72), et la première paroi (70) et la seconde paroi (72) sont configurées pour maintenir et pour loger le cordon (66, 68) entre elles.

4. Phare de véhicule (10) selon la revendication 3, dans lequel la séparation de support de cordon (64) comprend en outre une charnière (74) qui couple la première paroi (70) et la seconde paroi (72).

5. Phare de véhicule (10) selon l'une quelconque des revendications précédentes, dans lequel la séparation de support de cordon (64) est formée avec une pluralité de trous (71).

6. Phare de véhicule (10) selon l'une quelconque des revendications précédentes, dans lequel le corps de lampe (12) comprend un guide (82, 84) qui est configuré pour guider la séparation de support de cordon (64) dans une direction dans laquelle la séparation de support de cordon (64) est fixée au corps de lampe (64).

7. Phare de véhicule (10) selon l'une quelconque des revendications précédentes, dans lequel la séparation de support de cordon (64) comprend une partie de mise en prise (86) qui se met en prise avec le corps de lampe (12).

8. Phare de véhicule (10) selon la revendication 7, dans lequel le corps de lampe (64) comprend une partie d'ouverture (88) avec laquelle la partie de mise en prise (86) se met en prise.

9. Phare de véhicule (10) selon l'une quelconque des revendications précédentes, dans lequel la séparation de support de cordon (64) comprend une nervure (76) qui est formée le long d'un bord externe de la séparation de support de cordon (64).
